# EUROPÄISCHE PATENTANMELDUNG

(11) **EP 4 184 041 A1**
(43) Veröffentlichungstag der Anmeldung: **24.05.2023**
(21) Anmeldenummer: 22201975.4
(22) Anmeldetag: 17.10.2022
(51) Int. Cl.: F16J 15/3288

(54) **BÜRSTENDICHTUNG MIT ANSTREIFTOLERANTER STÜTZRINGSTRUKTUR**

(30) Priorität: 17.11.2021 DE 102021129985
(71) Anmelder: MTU Aero Engines AG, 80995 München (DE)
(72) Erfinder: Versluis, Joris, 80995 München (DE); Göttler, Johann, 80995 München (DE); Klausmann, Tobias, 80995 München (DE); Beichl, Stefan, 80995 München (DE)

(57) **Zusammenfassung**

Beschrieben wird eine Bürstendichtung (40) für eine Gasturbine (10), insbesondere Fluggasturbine, mit einer Stützringstruktur (44) und mit wenigstens einem Borstenpaket (46), das in axialer Richtung (AR) an der Stützringstruktur (44) angeordnet ist, wobei die Stützringstruktur (44) einen radial außen angeordneten Basisabschnitt (48) und einen radial innen angeordneten Stützabschnitt (50) aufweist, wobei der Stützabschnitt (50) eine dem Borstenpaket (46) zugewandte Stützfläche (52) aufweist, die das Borstenpaket (46) in axialer Richtung (AR) abstützt, und wobei der Stützabschnitt (50) einen radial inneren Randabschnitt (54) aufweist, der in einem montierten Zustand der Bürstendichtung (40) einem Rotorabschnitt (56) der Gasturbine (10) zugewandt ist. Dabei ist vorgesehen, dass der Stützabschnitt (50) ausgehend von dem radial inneren Randabschnitt (54) eine radiale Stützabschnittslänge (SL) aufweist mit im Wesentlichen konstanter axialer Stützabschnittsbreite (SB), wobei die Stützabschnittlänge (SL) um mindestens den Faktor vier größer ist als die Stützabschnittsbreite (SB). Ferner wird eine Gasturbine mit einer solchen Bürstendichtung (40) beschrieben.

## Beschreibung

Die Arbeiten, die zu dieser Erfindung geführt haben, wurden gemäß der Finanzhilfevereinbarung Nr. CS2-ENG-GAM-2014-2015-01 im Zuge des Siebten Rahmenprogramms der Europäischen Union (FP7/2007-2013) für Clean Sky Joint Technology Initiative gefördert.

Die vorliegende Erfindung betrifft eine Bürstendichtung für eine Gasturbine, insbesondere Fluggasturbine, mit einer Stützringstruktur und wenigstens einem Borstenpaket, das in axialer Richtung an der Stützringstruktur angeordnet ist, wobei die Stützringstruktur einen radial außen angeordneten Basisabschnitt und einen radial innen angeordneten Stützabschnitt aufweist, wobei der Stützabschnitt eine dem Borstenpaket zugewandte Stützfläche aufweist, die das Borstenpaket in axialer Richtung abstützt, und wobei der Stützabschnitt einen radial inneren Randabschnitt aufweist, der in einem montierten Zustand der Bürstendichtung einem Rotorabschnitt der Gasturbine zugewandt ist.

Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt.

Die Stützringstruktur bzw. der Stützring einer Bürstendichtung wird derzeit so ausgelegt, dass im Betrieb der Gasturbine keine Berührung mit dem rotierenden Teil bzw. Rotorabschnitt des Dichtsystems auftritt. Der Durchmesser des Stützrings bzw. des rotierenden Teils bzw. Rotorabschnitts sind daher so gewählt, dass ein Anstreifen der beiden Bauteile vermieden wird, weil ein solches Anstreifen zu einer Beschädigung des rotierenden Teils bzw. des Rotorabschnitts führen würde. Falls in einer Gasturbine eine radiale oder/und axiale Relativbewegung von Rotorabschnitt und Stützringstruktur größer wird bzw. ist, muss der Durchmesser der Stützringstruktur bzw. des Stützrings entsprechend größer gewählt werden. Ein großer Abstand zwischen dem Stützring und dem Rotorabschnitt führt dabei zu einer größeren Leckagefläche des Borstenpakets. Ferner wird bei einem größeren Durchmesser des Stützrings an seinem radialen Innenrand der Drahtüberstand des Borstenpakets vergrößert, wodurch der sogenannten Blow-over-Effekt (Durchbeigen von Borsten unter den Stützring) des Borstenpakets früher erreicht wird. Folglich wird ein Einsatzbereich einer solchen Bürstendichtung kleiner oder es muss ein Borstenpaket mit erhöhter axialer Steifigkeit eingesetzt werden. Allerdings hat letzteres Nachteile hinsichtlich Wärmeeintrag und Verschleiß. Bezüglich der Ausgestaltung verschiedener Bürstendichtungen wird beispielhaft auf folgende Dokumente hingewiesen: EP 453 315 B1, US 5 308 088 A, US 5 351 871 A, US 7 461 847 B2, US 6 471212 B1 und US 10 024 192 B2.

Die der Erfindung zu Grunde liegende Aufgabe wird darin gesehen, eine Bürstendichtung anzugeben, bei der die obigen Nachteile vermieden werden können.

Zur Lösung dieser Aufgabe werden eine Bürstendichtung und eine Gasturbine mit den Merkmalen der jeweiligen unabhängigen Patentansprüche vorgeschlagen. Bevorzugt und vorteilhafte Ausgestaltungen sind in den abhängigen Patentansprüchen enthalten.

Vorgeschlagen wird also eine Bürstendichtung für eine Gasturbine, insbesondere Fluggasturbine, mit einer Stützringstruktur und mit wenigstens einem Borstenpaket, das in axialer Richtung an der Stützringstruktur angeordnet ist, wobei die Stützringstruktur einen radial außen angeordneten Basisabschnitt und einen radial innen angeordneten Stützabschnitt aufweist, wobei der Stützabschnitt eine dem Borstenpaket zugewandte Stützfläche aufweist, die das Borstenpaket in axialer Richtung abstützt, und wobei der Stützabschnitt einen radial inneren Randabschnitt aufweist, der in einem montierten Zustand der Bürstendichtung einem Rotorabschnitt der Gasturbine zugewandt ist. Dabei ist vorgesehen, dass der Stützabschnitt ausgehend von dem radial inneren Randabschnitt eine radiale Stützabschnittslänge aufweist mit im Wesentlichen konstanter axialer Stützabschnittsbreite, wobei die Stützabschnittlänge um mindestens den Faktor vier größer ist als die Stützabschnittsbreite.

Durch eine derartige Ausgestaltung wird ein Stützring bereitgestellt, der bei einem eventuellen Anstreifen nicht zu kritischen Beschädigungen am rotierenden Bauteil bzw. Rotorabschnitt führt. Mit anderen Worten wird der Stützring an seinem radial inneren Stützabschnitt deutlich dünner ausgestaltet, um sicherzustellen, dass im Fall eines Anstreifens die Beschädigungen am Rotorabschnitt minimiert werden. Der Stützabschnitt bzw. die Stützringstruktur kann daher auch als anstreiftolerant bezeichnet werden. Trotz seiner im Vergleich zu bekannten Stützringen minimierten axialen Stützabschnittsbreite übernimmt der Stützring in üblichen Betriebsbereichen einer Gasturbine die Dichtwirkung und Borstenpaketstützwirkung. Bei der Bürstendichtung kann sich radial außen an den Stützabschnitt ein Übergangsabschnitt anschließen, der wenigstens eine von der Radialrichtung abweichende Krümmungskontur aufweist. Mittels einer derartigen Krümmungskontur können auf den relativ dünnen Stützabschnitt in Axialrichtung wirkende Kräfte optimal auf die Stützringstruktur bzw. den Basisabschnitt übertragen werden, ohne dass es im Übergangsbereich zu unerwünschten Spannungsspitzen mit der Gefahr von Rissbildung gibt.

Dabei kann der Übergangsabschnitt eine axiale Übergangsbreite aufweisen, die größer ist als die Stützabschnittsbreite. Ferner kann die axiale Übergangsbreite in radialer Richtung stetig oder diskret zunehmen.

Bei der Bürstendichtung können der Stützabschnitt, der Übergangsabschnitt und der Basisabschnitt der Stützringstruktur einstückig ausgebildet sein. Insbesondere kann in einem solchen Fall die Stützringstruktur als Drehteil, Blechteil oder generativ hergestellt werden.

Alternativ können bei der Bürstendichtung der Stützabschnitt und der Übergangsabschnitt als einstückiges Stützelement ausgeführt sein, das mit dem Basisabschnitt der Stützringstruktur in Verbindung steht. Insbesondere kann in einem solchen Fall die Stützringstruktur durch zwei Blechteile hergestellt bzw. gebildet werden.

Bei der Bürstendichtung kann die Stützabschnittslänge um maximal den Faktor zwanzig größer sein als die Stützabschnittsbreite. Insbesondere kann die Stützabschnittslänge um einen Faktor von fünf bis fünfzehn größer sein als die Stützabschnittsbreite.

Bei der Bürstendichtung kann die Stützabschnittslänge etwa 1mm bis 4mm, insbesondere 2mm bis 3mm, betragen, und die Stützabschnittsbreite kann etwa 0,1mm bis 0,8mm, insbesondere 0,2mm bis 0,6mm, betragen.

Die Bürstendichtung kann eine Deckringstruktur aufweisen, wobei das Borstenpaket in axialer Richtung zwischen der Deckringstruktur und der Stützringstruktur aufgenommen ist.

Vorgeschlagen wird auch eine Gasturbine, insbesondere Fluggasturbine, mit wenigstens einer oben beschriebenen Bürstendichtung, die einen Rotorabschnitt der Gasturbine umgibt. Insbesondere kann die Bürstendichtung im Bereich einer Niederdruckturbine eingesetzt werden. Weitere Einbauorte in der Gasturbine sind auch denkbar, wie beispielsweise Hochdruckverdichter und dergleichen.

Bei der Gasturbine kann der von der Bürstendichtung umgebene Rotorabschnitt in einem der Bürstendichtung zugewandten Anstreifbereich eine radiale Rotorabschnittsdicke aufweisen, die größer ist als die radiale Rotordicke außerhalb des Anstreifbereichs. Mit anderen Worten ist eine Wandstärke des Rotorabschnitts im Anstreifbereich größer, um den Rotor robuster gegen ein mögliches Anstreifen des Stützabschnitts zu gestalten.

Alternativ oder ergänzend kann bei der Gasturbine der Rotorabschnitt im Anstreifbereich eine radial außen liegende Beschichtung aufweisen. Insbesondere kann eine solche Beschichtung aus einem Material hergestellt sein, das widerstandsfähiger ist als das Material aus dem der Rotorabschnitt hergestellt ist.

Nachfolgend wird die Erfindung unter Bezugnahme auf die anliegenden Figuren beispielhaft und nicht einschränkend beschrieben.
Fig. 1 zeigt in einer vereinfachten schematischen Darstellung ein Prinzipbild einer Fluggasturbine.
Fig. 2 zeigt in einer vereinfachten und schematischen Schnittdarstellung ein Beispiel einer Bürstendichtung.
Fig. 3 zeigt in einer vereinfachten und schematischen Schnittdarstellung ein weiteres Beispiel einer Bürstendichtung.
Fig. 4 zeigt in einer vereinfachten und schematischen Schnittdarstellung ein weiteres Beispiel einer Bürstendichtung.

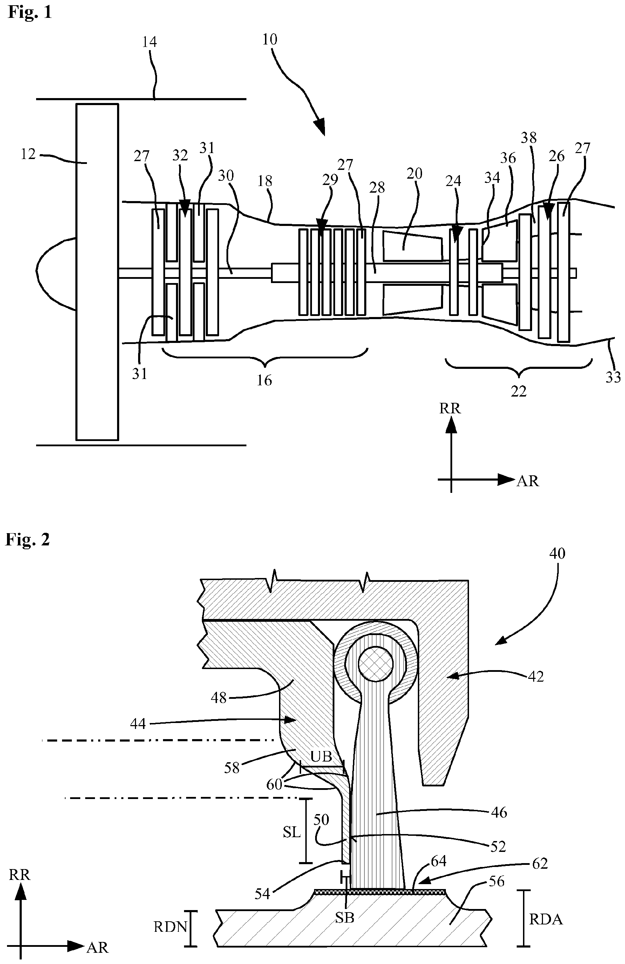

Fig. 1 zeigt schematisch und vereinfacht eine Fluggasturbine 10, die rein beispielhaft als Mantelstromtriebwerk illustriert ist. Die Gasturbine 10 umfasst einen Fan 12, der von einem angedeuteten Mantel 14 umgeben ist. In Axialrichtung AR der Gasturbine 10 schließt sich an den Fan 12 ein Verdichter 16 an, der in einem angedeuteten inneren Gehäuse 18 aufgenommen ist und einstufig oder mehrstufig ausgebildet sein kann. An den Verdichter 16 schließt sich die Brennkammer 20 an. Aus der Brennkammer ausströmendes heißes Abgas strömt dann durch die sich anschließende Turbine 22, die einstufig oder mehrstufig ausgebildet sein kann. Im vorliegenden Beispiel umfasst die Turbine 22 eine Hochdruckturbine 24 und eine Niederdruckturbine 26. Eine Hohlwelle 28 verbindet die Hochdruckturbine 24 mit dem Verdichter 16, insbesondere einem Hochdruckverdichter 29, so dass diese gemeinsam angetrieben bzw. gedreht werden. Eine in Radialrichtung RR der Turbine weitere innen liegende Welle 30 verbindet die Niederdruckturbine 26 mit dem Fan 12 und mit einem Niederdruckverdichter 32, so dass diese gemeinsam angetrieben bzw. gedreht werden. An die Turbine 22 schließt sich eine hier nur angedeutete Schubdüse 33 an.

Im dargestellten Beispiel einer Fluggasturbine 10 ist zwischen der Hochdruckturbine 24 und der Niederdruckturbine 26 ein Turbinenzwischengehäuse 34 angeordnet, das um die Wellen 28, 30 angeordnet ist. In seinem radial äußeren Bereich 36 wird das Turbinenzwischengehäuse 34 von heißen Abgasen aus der Hochdruckturbine 24 durchströmt. Das heiße Abgas gelangt dann in einen Ringraum 38 der Niederdruckturbine 26. Von den Verdichtern 28, 32 und den Turbinen 24, 26 sind beispielhaft Laufschaufelkränze 27 dargestellt. Üblicherweise vorhandene Leitschaufelkränze 31 sind aus Gründen der Übersicht beispielhaft nur bei dem Verdichter 32 dargestellt.

Nachfolgend werden Beispiele von Bürstendichtungen beschrieben, die insbesondere im Bereich einer Turbine 22, insbesondere Niederdruckturbine 26, oder eines Verdichters 16, insbesondere Hochdruckverdichters 29, eingesetzt bzw. angeordnet werden kann.

Fig. 2 zeigt in einer vereinfachten und schematischen Schnittdarstellung eine Bürstendichtung 40. Die Bürstendichtung 40 umfasst eine Deckringstruktur 42, die auch einfach als Deckring 42 bezeichnet werden kann. Ferner weist die Bürstendichtung 40 eine Stützringstruktur 44 auf, die vereinfacht auch als Stützring bezeichnet werden kann. In axialer Richtung AR zwischen der Deckringstruktur 42 und der Stützringstruktur 44 ist ein Borstenpaket 46 angeordnet bzw. aufgenommen.

Die Stützringstruktur 42 weist einen radial außen angeordneten Basisabschnitt 48 und einen radial innen angeordneten Stützabschnitt 50 auf. Der Stützabschnitt 50 weist eine dem Borstenpaket 46 zugewandte Stützfläche 52 auf, die das Borstenpaket 46 in axialer Richtung AR abstützt. Weiter weist der der Stützabschnitt 50 einen radial inneren Randabschnitt 54 auf, der in einem montierten Zustand der Bürstendichtung 40 einem Rotorabschnitt 56 der Gasturbine 10 zugewandt ist. Der Rotorabschnitt 56 kann beispielweise mit einer Welle 28 oder einer Welle 30 der Gasturbine 10 verbunden sein (Fig. 1).

Der Stützabschnitt 50 weist ausgehend von dem radial inneren Randabschnitt 54 eine radiale Stützabschnittslänge SL auf mit im Wesentlichen konstanter axialer Stützabschnittsbreite SB. Dabei ist die Stützabschnittlänge SL um mindestens den Faktor vier größer ist als die Stützabschnittsbreite SB. Somit wird eine Stützringstruktur 44 bereitgestellt, die bei einem eventuellen Anstreifen am Rotorabschnitt 56 nicht zu kritischen Beschädigungen am rotierenden Bauteil bzw. Rotorabschnitt 56 führt. Mit anderen Worten wird die Stützringstruktur 44 an ihrem radial inneren Stützabschnitt 50 deutlich dünner ausgestaltet, um sicherzustellen, dass im Fall eines Anstreifens die Beschädigungen am Rotorabschnitt 56 minimiert werden. Trotz einer solchen im Vergleich zu bekannten Stützringen minimierten axialen Stützabschnittsbreite SB übernimmt die Stützringstruktur in üblichen Betriebsbereichen einer Gasturbine die Dichtwirkung und Stützwirkung für das Borstenpaket 46.

An den Stützabschnitt 50 schließt sich radial außen ein Übergangsabschnitt 58 an, der wenigstens eine von der Radialrichtung RR abweichende Krümmungskontur 60 aufweist. Im Beispiel der Fig. 2 weisen die beiden gekrümmten Konturen 60 jeweils eine konvexe und eine konkave Krümmung auf, die aufeinander folgend ausgebildet sind.

Der Übergangsabschnitt 58 weist dabei eine axiale Übergangsbreite UB aufweist, die größer ist als die Stützabschnittsbreite SB. Insbesondere nimmt die axiale Übergangsbreite UB in radialer Richtung RR im Beispiel der Fig. 2 stetig zu. Aus der Fig. 2 ist ebenfalls ersichtlich, dass der Stützabschnitt 50, der Übergangsabschnitt 58 und der Basisabschnitt 48 der Stützringstruktur 44 einstückig ausgebildet sind. In der Fig. 2 ist insbesondere eine Stützringstruktur 44 gezeigt, die als Drehteil oder generativ hergestellt ist. Die Unterteilung der Stützringstruktur 44 in Stützabschnitt 50, Übergangsabschnitt 58 und Basisabschnitt 48 wird qualitativ durch die strichpunktierten Linien in der Fig. 2 angedeutet.

Aus der Fig. 2 ist ferner ersichtlich, dass der von der Bürstendichtung 40 umgebene Rotorabschnitt 56 in einem der Bürstendichtung zugewandten Anstreifbereich 62 eine radial Rotordicke RDA aufweist, die größer ist als die radiale Rotordicke RDN außerhalb des Anstreifbereichs 62. Eine derartige Vergrößerung der Rotordicke ist optional und weist den Vorteil auf, dass die Wandstärke RDA des Rotorabschnitts 56 im Anstreifbereich 62 größer ist, um den Rotor robuster gegen ein mögliches Anstreifen des Stützabschnitts 50 zu gestalten.

Ein weiteres optionales Merkmal des Rotorabschnitts 56 ist ebenfalls in Fig. 2 dargestellt. Der Rotorabschnitt 56 kann im Anstreifbereich 62 eine radial außen liegende Beschichtung 64 aufweisen.

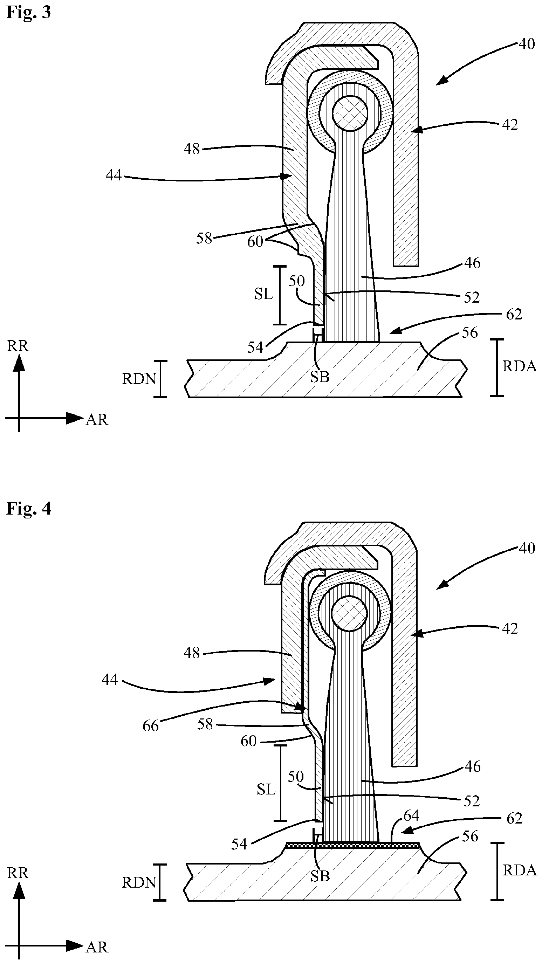

Es wird darauf hingewiesen, dass die größere radiale Dicke bzw. Wandstärke RDA des Rotorabschnitts 56 im Anstreifbereich 62 und die Beschichtung 64 kombiniert oder jeweils einzeln oder auch gar nicht vorgesehen sein können. Dies gilt sowohl für das Beispiel der Fig. 2, als auch für die nachfolgend noch beschriebenen Beispiel der Fig. 3 und 4.

Fig. 3 zeigt in einer vereinfachten und schematischen Schnittdarstellung ein weiteres Beispiel einer Bürstendichtung 40. Die Bürstendichtung 40 umfasst eine Deckringstruktur 42, die auch einfach als Deckring 42 bezeichnet werden kann. Ferner weist die Bürstendichtung 40 eine Stützringstruktur 44 auf, die vereinfacht auch als Stützring bezeichnet werden kann. In axialer Richtung AR zwischen der Deckringstruktur 42 und der Stützringstruktur 44 ist ein Borstenpaket 46 angeordnet bzw. aufgenommen.

Auch bei diesem Beispiel weist die Stützringstruktur 42 einen radial außen angeordneten Basisabschnitt 48 und einen radial innen angeordneten Stützabschnitt 50 auf. Der Stützabschnitt 50 weist eine dem Borstenpaket 46 zugewandte Stützfläche 52 auf, die das Borstenpaket 46 in axialer Richtung AR abstützt. Weiter weist der der Stützabschnitt 50 einen radial inneren Randabschnitt 54 auf, der in einem montierten Zustand der Bürstendichtung 40 einem Rotorabschnitt 56 der Gasturbine 10 zugewandt ist. Der Rotorabschnitt 56 kann beispielweise mit einer Welle 28 oder einer Welle 30 der Gasturbine 10 verbunden sein (Fig. 1).

Auch in diesem Beispiel weist der Stützabschnitt 50 ausgehend von dem radial inneren Randabschnitt 54 eine radiale Stützabschnittslänge SL auf mit im Wesentlichen konstanter axialer Stützabschnittsbreite SB. Dabei ist die Stützabschnittlänge SL um mindestens den Faktor vier größer ist als die Stützabschnittsbreite SB. Somit wird eine Stützringstruktur 44 bereitgestellt, die bei einem eventuellen Anstreifen am Rotorabschnitt 56 nicht zu kritischen Beschädigungen am rotierenden Bauteil bzw. Rotorabschnitt 56 führt. Mit anderen Worten wird die Stützringstruktur 44 an ihrem radial inneren Stützabschnitt 50 deutlich dünner ausgestaltet, um sicherzustellen, dass im Fall eines Anstreifens die Beschädigungen am Rotorabschnitt 56 minimiert werden. Trotz einer solchen im Vergleich zu bekannten Stützringen minimierten axialen Stützabschnittsbreite SB übernimmt die Stützringstruktur in üblichen Betriebsbereichen einer Gasturbine die Dichtwirkung und Stützwirkung für das Borstenpaket 46.

An den Stützabschnitt 50 schließt sich radial außen ein Übergangsabschnitt 58 an, der wenigstens eine von der Radialrichtung RR abweichende Krümmungskontur 60 aufweist. Im Beispiel der Fig. 3 weisen die beiden gekrümmten Konturen 60 jeweils eine konvexe und eine konkave Krümmung auf.

Der Übergangsabschnitt 58 weist dabei eine axiale Übergangsbreite UB aufweist, die größer ist als die Stützabschnittsbreite SB. Insbesondere nimmt die axiale Übergangsbreite UB in radialer Richtung RR im Beispiel der Fig. 3 stetig zu. Aus der Fig. 32 ist ebenfalls ersichtlich, dass der Stützabschnitt 50, der Übergangsabschnitt 58 und der Basisabschnitt 48 der Stützringstruktur 44 einstückig ausgebildet sind. In der Fig. 3 ist insbesondere eine Stützringstruktur 44 gezeigt, die als umgeformtes Blechteil hergestellt ist. Die Unterteilung der Stützringstruktur 44 in Stützabschnitt 50, Übergangsabschnitt 58 und Basisabschnitt 48 wird qualitativ durch die strichpunktierten Linien in der Fig. 3 angedeutet.

Auch das Beispiel der Fig. 3 zeigt den Rotorabschnitt 56 mit größerer Rotordicke bzw. Wandstärke RDA im Anstreifbereich 62, allerdings ohne Beschichtung.

Fig. 4 zeigt ein zum Beispiel der Fig. 3 ähnliches Beispiel einer Bürstendichtung 40. Im Unterschied zur einstückigen Ausgestaltung der Stützringstruktur 44 der Fig. 3 (und auch der Fig. 2) ist die Stützringstruktur 44 in der Fig. 4 mehrteilig, insbesondere zweiteilig, ausgeführt. Dabei sind der Stützabschnitt und der Übergangsabschnitt 58 als einstückiges Stützelement 66 ausgeführt sind, das mit dem Basisabschnitt 48 der Stützringstruktur in Verbindung steht. Der Basisabschnitt 48 und das Stützelement 66 sind jeweils aus umgeformten Blechteilen hergestellt. Im Übrigen wird in Bezug auf weitere in der Fig. 4 gezeigten Bezugszeichen auf die obige Beschreibung der Fig. 2 und 3 verwiesen, die auch für das Beispiel der Bürstendichtung 40 der Fig. 4 gültig ist und in analoger Weise anwendbar ist.

Für alle oben unter Bezugnahme auf die Fig. 2 bis 4 gezeigten Beispiele von Bürstendichtungen 40 gilt in Bezug auf den Stützabschnitt 50 mit seiner Stützabschnittslänge SL und seiner Stützabschnittsbreite SB folgendes: Die Stützabschnittslänge SL ist um maximal den Faktor zwanzig größer ist als die Stützabschnittsbreite SB. Beispielhaft kann die die Stützabschnittslänge SL etwa 1mm bis 4mm, insbesondere 2mm bis 3mm, betragen, und die Stützabschnittsbreite SB kann etwa 0,1mm bis 0,8mm, insbesondere 0,2mm bis 0,6mm, betragen.

### Bezugszeichenliste

- 10: Fluggasturbine
- 12: Fan
- 14: Mantel
- 16: Verdichter
- 18: inneres Gehäuse
- 20: Brennkammer
- 22: Turbine
- 24: Hochdruckturbine
- 26: Niederdruckturbine
- 28: Hohlwelle
- 29: Hochdruckverdichter
- 30: Welle
- 31: Leitschaufelkranz
- 32: Niederdruckverdichter
- 33: Schubdüse
- 34: Turbinenzwischengehäuse
- 36: radial äußerer Bereich
- 38: Ringraum
- 40: Bürstendichtung
- 42: Deckringstruktur
- 44: Stützringstruktur
- 46: Borstenpaket
- 48: Basisabschnitt
- 50: Stützabschnitt
- 52: Stützfläche
- 54: Randabschnitt
- 56: Rotorabschnitt
- 58: Übergangsabschnitt
- 60: Kontur
- 62: Anstreifbereich
- 64: Beschichtung
- 66: Stützelement
- AR: Axialrichtung
- RR: Radialrichtung
- RDA: Rotordicke bzw. Wandstärke
- RDN: Rotordicke bzw. Wandstärke
- SB: Stützabschnittsbreite
- SL: Stützabschnittslänge
- UB: Übergangsbreite

## Patentansprüche

1. Bürstendichtung (40) für eine Gasturbine (10), insbesondere Fluggasturbine, mit
einer Stützringstruktur (44);
wenigstens einem Borstenpaket (46), das in axialer Richtung (AR) an der Stützringstruktur (44) angeordnet ist;
wobei die Stützringstruktur (44) einen radial außen angeordneten Basisabschnitt (48) und einen radial innen angeordneten Stützabschnitt (50) aufweist,
wobei der Stützabschnitt (50) eine dem Borstenpaket (46) zugewandte Stützfläche (52) aufweist, die das Borstenpaket (46) in axialer Richtung (AR) abstützt, und
wobei der Stützabschnitt (50) einen radial inneren Randabschnitt (54) aufweist, der in einem montierten Zustand der Bürstendichtung (40) einem Rotorabschnitt (56) der Gasturbine (10) zugewandt ist,
**dadurch gekennzeichnet, dass**
der Stützabschnitt (50) ausgehend von dem radial inneren Randabschnitt (54) eine radiale Stützabschnittslänge (SL) aufweist mit im Wesentlichen konstanter axialer Stützabschnittsbreite (SB), wobei die Stützabschnittlänge (SL) um mindestens den Faktor vier größer ist als die Stützabschnittsbreite (SB).

2. Bürstendichtung (40) nach Anspruch 1, **dadurch gekennzeichnet, dass** sich radial außen an den Stützabschnitt (50) ein Übergangsabschnitt (58) anschließt, der wenigstens eine von der Radialrichtung (RR) abweichende Krümmungskontur (60) aufweist.

3. Bürstendichtung (40) nach Anspruch 2, **dadurch gekennzeichnet, dass** der Übergangsabschnitt (58) eine axiale Übergangsbreite (UB) aufweist, die größer ist als die Stützabschnittsbreite (SB).

4. Bürstendichtung (40) nach Anspruch 3, **dadurch gekennzeichnet, dass** die axiale Übergangsbreite (UB) in radialer Richtung (RR) stetig oder diskret zunimmt.

5. Bürstendichtung (40) nach einem der Ansprüche 2 bis 4, **dadurch gekennzeichnet, dass** der Stützabschnitt (50), der Übergangsabschnitt (58) und der Basisabschnitt (48) der Stützringstruktur (44) einstückig ausgebildet sind.

6. Bürstendichtung (40) nach Anspruch 1 oder 2, **dadurch gekennzeichnet, dass** der Stützabschnitt (50) und der Übergangsabschnitt (58) als einstückiges Stützelement (66) ausgeführt sind, das mit dem Basisabschnitt (48) der Stützringstruktur (44) in Verbindung steht.

7. Bürstendichtung (40) nach einem der vorhergehenden Ansprüche, **dadurch gekennzeichnet, dass** die Stützabschnittlänge (SL) um maximal den Faktor zwanzig größer ist als die Stützabschnittsbreite (SB).

8. Bürstendichtung (40) nach einem der vorhergehenden Ansprüche, **dadurch gekennzeichnet, dass** die Stützabschnittslänge (SL) etwa 1mm bis 4mm, insbesondere 2mm bis 3mm, beträgt, und dass die Stützabschnittsbreite (SB) etwa 0,1mm bis 0,8mm, insbesondere 0,2mm bis 0,6mm, beträgt.

9. Bürstendichtung (40) nach einem der vorhergehenden Ansprüche, **dadurch gekennzeichnet, dass** sie eine Deckringstruktur (42) aufweist, wobei das Borstenpaket (46) in axialer Richtung (AR) zwischen der Deckringstruktur (42) und der Stützringstruktur (44) aufgenommen ist.

10. Gasturbine (10), insbesondere Fluggasturbine, mit wenigstens einer Bürstendichtung (40) gemäß einem der vorhergehenden Ansprüche, die einen Rotor abschnitt (56) der Gasturbine (10) umgibt.

11. Gasturbine (10) nach Anspruch 10, wobei der von der Bürstendichtung (40) umgebene Rotorabschnitt (56) in einem der Bürstendichtung (40) zugewandten Anstreifbereich (62) eine radial Rotordicke (RDA) aufweist, die größer ist als die radiale Rotordicke (RDN) außerhalb des Anstreifbereichs (62).

12. Gasturbine (10) nach Anspruch 11, wobei der Rotorabschnitt (56) im Anstreifbereich (62) eine radial außen liegende Beschichtung (64) aufweist.
